# EUROPEAN PATENT SPECIFICATION

(11) **EP 4 563 785 B1**
(45) Date of publication and mention of the grant of the patent: **19.08.2026**
(21) Application number: 24161906.3
(22) Date of filing: 07.03.2024
(51) Int. Cl.: E21B 17/042, B23K 26/34, F16L 15/00, F16L 21/00, F16L 58/18

(54) **A STRUCTURE WITH A CASING PIPE AND A THREADED JOINT AND A PRODUCTION METHOD THEREOF**
STRUKTUR MIT EINEM GEHÄUSEROHR UND EINER SCHRAUBVERBINDUNG UND HERSTELLUNGSVERFAHREN DAFÜR
STRUCTURE AVEC UN TUBE DE GAINAGE ET UN JOINT FILETÉ ET SON PROCÉDÉ DE PRODUCTION

(30) Priority: 30.11.2023 CN 202311623525; 31.01.2024 CN 202410131628
(43) Date of publication of application: 04.06.2025
(73) Proprietor: Jingjiang Special Steel Co., Ltd, Jingjiang Jiangsu 214500 (CN)
(72) Inventor: Liu, Wenxue, Jingjiang, 214500 (CN); Sun, Yu, Jingjiang, 214500 (CN); Wang, Sheng, Jingjiang, 214500 (CN); Mei, Li, Jingjiang, 214500 (CN); Yao, Yong, Jingjiang, 214500 (CN); Xie, Guannan, Jingjiang, 214500 (CN); Zhang, Zhiyuan, Jingjiang, 214500 (CN); Yin, Qingjin, Jingjiang, 214500 (CN); He, Yue, Jingjiang, 214500 (CN); Zhu, Yufeng, Jingjiang, 214500 (CN)
(74) Representative: Huang, Liwei

(56) References cited:
- WO-A1-2011/054439
- CN-A- 112 049 580
- US-A- 6 073 332
- US-A1- 2020 011 472
- ZHANG KAI ET AL: "Microstructure and properties of composite coatings by laser cladding Inconel 625 and reinforced WC particles on non-magnetic steel", OPTICS AND LASER TECHNOLOGY, ELSEVIER SCIENCE PUBLISHERS BV., AMSTERDAM, NL, vol. 163, 13 March 2023 (2023-03-13), XP087300726, ISSN: 0030-3992, [retrieved on 20230313], DOI: 10.1016/J.OPTLASTEC.2023.109321

## Description

### TECHNICAL FIELD

The invention relates to the technical field of weld cladding, in particular to a structure with a casing pipe and a threaded joint obtained by using weld cladding, as well as a production method thereof.

### BACKGROUND ART

Compressed-air energy-storage (CAES) technology refers to that during a valley period of power consumption, a power grid uses excess electric energy to drive compressors, so as to pressurize the atmosphere and store it in underground salt caverns or other types of sealed storage chambers, so as to achieve the conversion from electrical energy to potential energy. During a peak period of power consumption, the compressed air in the air storage chamber is released to drive the expander to generate electricity, thereby performing peak load regulation in a power grid. Compressed-air energy-storage technology has the advantages of low cost, large capacity, long life, and cleanliness. On the one hand, it enhances the regulation capability and flexibility of the power system, and on the other hand, it becomes an effective solution to help achieve the targets of carbon peaking and carbon neutrality.

Salt-cavern energy-storage wells are located in harsh corrosive environments, and the wellbore is repeatedly subjected to non-uniform loads and ultra-high pressures. Therefore, higher requirements are put forward for the pipe's resistance to oxygen corrosion, resistance to salinity corrosion, and the air tightness of the pipe column. At present, the world's largest compressed-air energy-storage station is the 290MW energy storage station named as Huntorf Power Station in Germany. The built projects in China are all at the level of 100MW or below. The pipes used are mainly Cr-containing stainless steel, however high Cr materials such as 13Cr are expensive.

Patent Publication CN102453901B discloses a method for preparing WC carbide wear-resistant bands on the surface of oil drill stem. By using the laser cladding process, nickel-based alloy powders, which have good toughness, high strength and good metallurgy compatibility with the base metal, are selected as a substrate layer, and WC cemented carbide powders with high wear resistance are selected as a working layer. Not only the characteristics of the working layer are met, but also a good bonding strength between the working layer and the base material is ensured. Besides, during use a crack can be prevented from extending to the base material. The alloy coating obtained from laser cladding is uniform and dense. The coating has excellent wear resistance and corrosion resistance, which significantly improves the wear resistance and corrosion resistance of the oil drill stem, and thus improves the service life of the oil drill stem.

However, the above-mentioned patent of laser cladding does not disclose the process of cladding the inner wall of a casing pipe, nor how to ensure the air sealing ability and corrosion resistance thereof after the weld cladding.

US 2020/011472 A1 discloses a method for making a threaded tubular connection between a pipe and a joint. An anti-corrosion coating layer is applied on the inner surface of the casing using a welding process and comprises a Ni-based alloy.

### SUMMARY OF INVENTION

The invention is set out in the appended claims. The present disclosure provides a structure with a casing pipe and a threaded joint,
wherein it comprises a casing pipe and a threaded joint, wherein the threaded joint is suitable for being provided around an end of the casing pipe, so as to connect two casing pipes; wherein the inner wall of the casing pipe is covered with nickel-based alloy obtained by weld cladding, and the outer wall at at least one end of the casing pipe is covered with nickel-based alloy obtained by weld cladding, and the inner wall of the threaded joint is covered with nickel-based alloy obtained by weld cladding.

Optionally, the whole inner wall of the casing pipe may be covered with the nickel-based alloy (obtained by weld cladding). Optionally, only a part of the outer wall of the casing pipe (e.g. the part near/at the end(s) of casing pipe) is covered with the nickel-based alloy (obtained by weld cladding).

The term "inner wall" can be synonymous with "inner surface"in the present invention. The term "outer wall" can be synonymous with "outer surface"in the present invention.

A threaded portion is provided on the outer wall of the casing pipe and on the inner wall of the threaded joint.

One end of the threaded portion of the casing pipe is provided with an undercut groove. An undercut groove is also known as a "relief groove". It is used at the end of the threaded portion to provide clearance for the cutting tool.

One end of the threaded portion of the casing pipe is provided with a sealing surface

A torque shoulder, especially a reverse torque shoulder is provided at an inner side of the sealing surface.

A "reverse torque shoulder" is also called as a "negative-angle torque shoulder", which means that the shoulder is tilted in a reversed direction, and thus inclination angle of the shoulder relative to the direction of torque rotation is negative. This design provides a hooked shape at the end of the threaded portion. This design helps provide better stability.

As a preferred embodiment, not part of the invention, of the structure with the casing pipe and the threaded joint according to the present invention, an arc connection is provided between the sealing surface and the negative-angle torque shoulder. More preferably, the angle between the sealing surface and the negative-angle torque shoulder is 100 - 130°.

In the structure with the casing pipe and the threaded joint according to the present invention, the nickel-based alloy has good resistance to corrosion, such as nickel-chromium-based alloy, in particular Inconel alloy, like Inconel 625 alloy.

The present invention provides a method for producing a structure with a casing pipe and a threaded joint, especially a method for producing the above-mentioned structure with the casing pipe and the threaded joint according to claim 1.

The method includes the following steps:

### Step 1. Weld cladding treatment on the inner wall of the threaded joint

(1) Providing a threaded joint, performing lathe turning on the inner wall, so that the roughness of the surface of the inner wall Ra is ≤ 25µm, and then optionally degreasing and cleaning.

The roughness is represented by an arithmetic mean deviation of the contour (Ra), which refers to the arithmetic mean of the absolute values of ordinate values Z(x) in a sample length I. $Ra = \frac{1}{l} {\int }_{0}^{l} \left|Z\left(x\right)\right| dx$

The calculation formula is

(2) Using a laser cladding process to clad powders of nickel-based alloy on the inner wall of the threaded joint, wherein the nickel-based alloy is preferred to be nickel-chromium-based alloy, for example Inconel alloy, like Inconel 625 alloy.

The cladding may be performed for 2 to 3 layers. Preferably, the cladding thickness for the sealing surface is 0.55-1.2 mm, and the cladding thickness for the negative-angle torque shoulder is 0.55-1.2 mm.

(3) Optionally, using an electroplating process to plate copper on the surface of the threaded joint; for example, for a threaded joint, the whole inner surface may be weld cladded, and the whole outer surface may be copper-plated.

### Step 2. Weld cladding treatment on the casing pipe

(1) Performing lathe turning on the inner wall of the casing pipe and on the outer wall at the end(s) of the casing pipe, so that the roughness of the surface thereof Ra is ≤ 25µm, and then optionally degreasing and cleaning.
(2) Using a laser cladding process to weld and clad powders of nickel-based alloy on the inner wall of the casing pipe, and to weld and clad powders of nickel-based alloy around the end of the casing pipe, wherein the nickel-based alloy is preferred to be nickel-chromium-based alloy, for example Inconel alloy, like Inconel 625 alloy.

The cladding may be performed for 2 to 3 layers. Preferably, the cladding thickness for the sealing surface is 0.55-1.2 mm, and the cladding thickness for the negative-angle torque shoulder is 0.55-1.2 mm.

### Step 3. Processing the products obtained after weld cladding

(1) Rough turning, so as to remove the porosity hs on the inner wall of the threaded joint, the outer wall of the casing pipe, and the outer wall at the end(s) of the casing pipe, that is to say, to remove an uneven layer on the surface thereof.

Preferably, a rough turning tool made of carbide is used.

Preferably, the tool tip has an arc of R0.5-1.5mm; the machine tool has a speed of 70-120 rpm, and a cutting depth of the turning tool is 0.02-0.07mm.

The thickness of the cladding layer after rough turning may be expressed as hb ≤ ha-hs, where ha is the thickness of the cladding layer before rough turning, hs is porosity, i.e. hs corresponds to the thickness difference between the highest and lowest points of the uneven surface (i.e. the thickness of the uneven layer).

(2) Finish turning, so as to form the final threaded shape on the inner wall of the threaded joint, and the outer wall at the end of the casing pipe.

Preferably, a finish turning tool made of ceramic material is used.

Preferably, the tool tip has an arc of R0.1-1mm; the machine tool has a speed of 90-150 rpm, and a cutting depth of the turning tool is 0.03-0.08 mm.

Preferably, the final product has a thickness of cladding layer hc ≥ 0.5 mm.

In the method of producing the structure with the casing pipe and the threaded joint according to the present invention, an ultra-high-speed laser cladding process is used. The parameters are laser power is 2200-2500 W, diameter of laser spot is 1.0-1.8 mm, linear velocity of scanning is 25-80 m/min. The overlap rate (overlap between adjacent cladding tracks) is 60-70%, feeding rate of powders is 10-20 g/min.

As a preferred embodiment for the method of producing the structure with the casing pipe and the threaded joint according to the present invention, the laser cladding process is performed under protection of protective gas. The protective gas may be nitrogen, for example, its flow rate may be 10-15 L/min.

As a preferred embodiment for the method of producing the structure with the casing pipe and the threaded joint according to the present invention, the degreasing and cleaning includes ultrasonic degreasing. For example, the ultrasonic degreasing/cleaning agent has a concentration of 4 to 6%, the temperature is 40 to 50°C, and the ultrasonic frequency is 25 kHz.

As a preferred embodiment for the method of producing the structure with the casing pipe and the threaded joint according to the present invention, the degreasing and cleaning includes electrolytic degreasing. For example, the electrolytic degreasing liquid is an active alkali, the alkali liquid has a temperature of 60-80°C, and the current density is 8-10 A/dm².

As a preferred embodiment for the method of producing the structure with the casing pipe and the threaded joint according to the present invention, in the electroplating process, the plating solution comprises cuprous cyanide, sodium cyanide and sodium hydroxide.

As a preferred embodiment for the method of producing the structure with the casing pipe and the threaded joint according to the present invention, in the electroplating process, during electroplating, the cathode current density is 0.2-2 A/dm², the temperature is 55-65°C.

As a preferred embodiment for the method of producing the structure with the casing pipe and the threaded joint according to the present invention, after the electroplating process, the copper plating layer has a thickness of 80-100µm.

The present invention can achieve at least one of the following beneficial effects:
1. The present invention uses a laser cladding process to clad and weld nickel-based alloy on the inner wall of the threaded joint, on the inner wall of the casing pipe and on the outer wall of the end(s) of the casing pipe. The product of the present invention can meet the anti-corrosion requirements in working environments and the requirements of sealing performance. It solves the problem that some alloy pipes do not have sufficient resistance to corrosion and the cost of Cr-serie pipe is high. It help the high-power compressed-air energy-storage projects to be applied in batches in industry.
2. The present invention uses the structure comprising undercut groove, sealing surface, and negative-angle torque shoulder, to ensure that the casing pipe and the threaded joint after weld cladding have good sealing performance.
3. In the present invention, Inconel 625 alloy is a nickel-based high-temperature alloy strengthened by solid solution, with molybdenum and niobium as the main strengthening elements. It has excellent corrosion resistance and oxidation resistance, and has good tensile properties and fatigue properties from low temperature to high temperature 980°C. It is resistant to stress corrosion in salty atmosphere, and thus can significantly improve the wear resistance, the corrosion resistance and the service life of the connection of casing pipe and threaded joint. It is especially suitable for use in the harsh corrosive environments in salt cavern energy storage wells.
4. In the present invention, Inconel 625 has good wear resistance, thus can improve the wear resistance of the connection between the casing pipe and the threaded joint, and reduce damage caused by wear and corrosion, and ensure the good sealing performance.

### DESCRIPTION OF DRAWINGS

Figure 1 shows the picture that corrosion occurs on the inner wall of pipes for salt cavern energy storage.
Figure 2 is a schematic diagram showing the structure when the casing pipe and the threaded joint are connected in the present invention.
Figure 3 is a cross-sectional view of the structure comprising the casing pipe and the threaded joint according to the present invention.
Figure 4 is a partial enlarged view of the position a in Figure 3 according to the present invention.
Figure 5 is a partial enlarged view of the position b in Figure 3 according to the present invention.
Figure 6 is a partial enlarged view of the position c in Figure 3 according to the present invention.
Figure 7 is a diagram of the processing after weld cladding in the present invention. Therein: 100, casing pipe; 200, threaded joint; 300, threaded portion; 400, undercut groove; 500, sealing surface; 600, negative-angle torque shoulder.

### DETAILED EMBODIMENTS

In order to make the above objects, features and advantages of the present invention easier to understand, some specific embodiments of the present invention will be described in detail below in conjunction with the accompanying drawings.

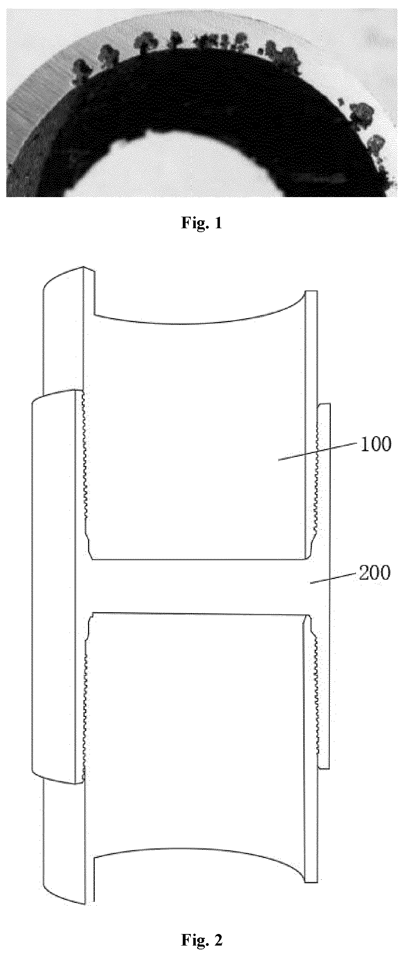

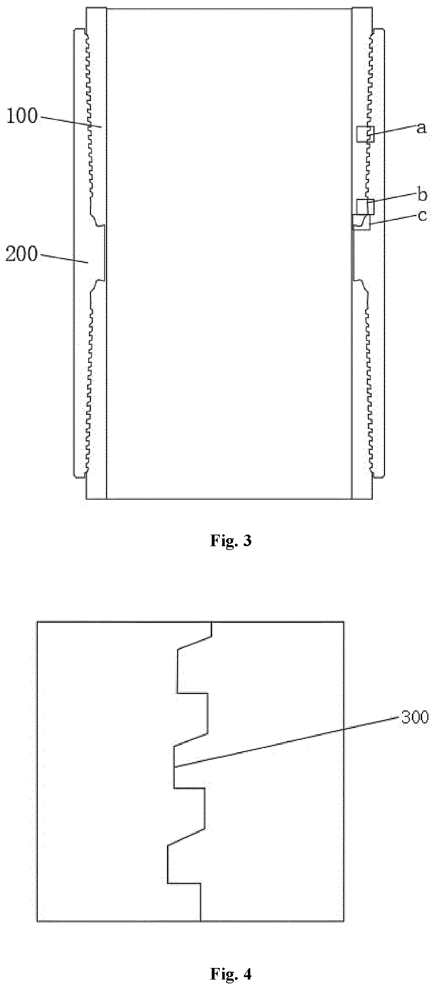

As shown in Fig. 2 and Fig. 3, it provides a structure with a casing pipe and a threaded joint, wherein it comprises a casing pipe 100 and a threaded joint 200, the threaded joint 200 is so structured as to connect two casing pipes 100; wherein the inner wall of the casing pipe 100 is covered with nickel-based alloy obtained by weld cladding, and the outer wall near/at one end (or two ends) of the casing pipe 100 is covered with nickel-based alloy obtained by weld cladding, and the inner wall of the threaded joint 200 is covered with nickel-based alloy obtained by weld cladding.

Preferably, the nickel-based alloy has good resistance to corrosion, such as nickel-chromium-based alloy, for example Inconel alloy, like Inconel 625 alloy.

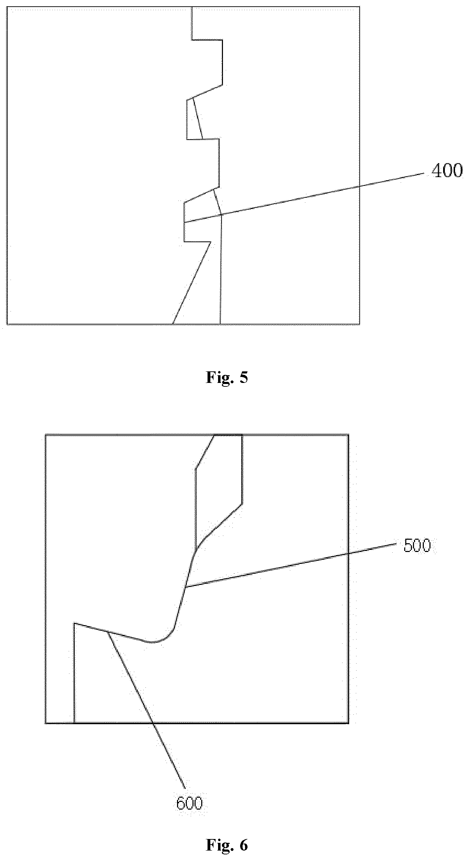

As shown in Fig. 2 to Fig. 6, a threaded portion 300 is provided on the outer wall of the casing pipe 100 and on the inner wall of the threaded joint 200.

One end of the threaded portion 300 (especially the lower end of the threaded portion 300) is provided with an undercut groove 400.

One end (especially the lower end) of the undercut groove 400 is provided with a sealing surface 500. The sealing surface 500 of the casing pipe 100 and the sealing surface 500 of the threaded joint 200 are so matched with each other that a sealing performance can be ensured.

A torque shoulder 600, especially a reverse torque shoulder 600 is provided at an inner side of the sealing surface 500.

As a preferred embodiment, an arc connection is provided between the sealing surface and the negative-angle torque shoulder.

More preferably, the angle between the sealing surface and the negative-angle torque shoulder is 100 - 130°.

In the structure with the casing pipe and the threaded joint according to the present invention, the nickel-based alloy has good resistance to corrosion, such as nickel-chromium-based alloy, and is an Inconel alloy, namely Inconel 625 alloy.

As shown in Figure 1, since the inner wall of the casing 100 is exposed to the corrosive medium, the inner wall of the pipe may be corroded. After the entire string of pipes enters the ground, the entire string of pipes is subject to a tensile load caused by the gravity. Under the action of the tensile load, the negative-angle torque shoulder 600 of the end of the casing pipe 100 and the negative-angle torque shoulder 600 of the threaded joint 200 may be separated. Thereafter, the corrosive medium will pass through the separated negative-angle torque shoulders 600 and directly corrode the sealing surface 500, which causes corrosion and failure of the sealing surface 500 and eventually the entire well cannot be used any more.

In the present invention, the inner wall, the portion for negative-angle torque shoulder 600 and sealing surface 500 of the casing pipe 100, as well as the inner wall, the portion for the negative-angle torque shoulder 600 and sealing surface 500 of the threaded joint 200, are cladded and welded, and then threads are processed. Thereby, the corrosion resistance is improved, and the sealing performance is ensured.

The present invention uses Inconel 625 alloy, a nickel-based alloy for cladding, so as to improve the anti-corrosion properties, in particular a nickel-based alloy containing chromium, especially a nickel-based alloy containing no less than 50 wt% Ni and no less than 20 wt% Cr.

Inconel^{®} is a family of high-performance nickel-chromium-based alloys that are used in a variety of applications that require resistance to corrosion and high temperature. The alloys are characterized by high strength, toughness, and resistance to oxidation, carburization, and sulfidation, making them ideal for use in harsh and demanding environments.

Inconel 625 alloy is also named as INCONEL^{®} nickel-chromium alloy 625 (UNS N06625). The chemical composition of Inconel 625 alloy can be described as follows.

**Table 1 - Limiting Chemical Composition, %**

| | |
|---|---|
| Nickel | 58.0 min. |
| Chromium | 20.0-23.0 |
| Iron | 5.0 max. |
| Molybdenum | 8.0-10.0 |
| Niobium (plus Tantalum) | 3.15-4.15 |
| Carbon | 0.10 max. |
| Manganese | 0.50 max. |
| Silicon | 0.50 max. |
| Phosphorus | 0.015 max. |
| Sulfur | 0.015 max. |
| Aluminum | 0.40 max. |
| Titanium | 0.40 max. |
| Cobalt^{a} | 1.0 max. |

| | |
|---|---|
| ^{a}If determined | |

### Example 1

A method for producing a structure with a casing pipe and a threaded joint, includes the following steps:

### Step 1. Weld cladding treatment on the inner wall of the threaded joint

(1) Providing a threaded joint, performing lathe turning on the inner wall to roughness Ra=10µm, and then degreasing and cleaning the inner wall.
   The degreasing and cleaning includes ultrasonic degreasing, the ultrasonic degreasing cleaning agent has a concentration of 4 %, the temperature is 40°C, and the ultrasonic frequency is 25 kHz; the degreasing and cleaning further includes electrolytic degreasing, the electrolytic degreasing liquid is an active alkali, the alkali liquid has a temperature of 60°C, and the current density is 8 A/dm².
(2) Using an ultra-high-speed laser cladding process to clad Inconel 625 powders on the inner wall of the threaded joint.

The cladding is performed for 2 layers. The cladding thickness for the sealing surface is 0.55 mm, and the cladding thickness for the negative-angle torque shoulder is 0.55 mm.

In the ultra-high-speed laser cladding process, the parameters may be: laser power is 2200 W, diameter of laser spot is 1.0 mm, linear velocity of scanning is 25 m/min, overlap rate is 60%, feeding rate of powders is 10 g/min. The ultra-high-speed laser cladding process is performed under protection of protective gas. The protective gas is nitrogen, with a flow rate of 10 L/min.

(3) Using an electroplating process to plate copper on the surface of the threaded joint;
In the electroplating process, the plating solution comprises cuprous cyanide, sodium cyanide and sodium hydroxide; the cathode current density is 0.2 A/dm², the temperature is 55°C; after the electroplating process, the copper plating layer has a thickness of 80µm.

### Step 2. Weld cladding treatment on the casing pipe

(1) Performing lathe turning on the inner wall of the casing pipe and on the outer wall at the end(s) of the casing pipe, to roughness Ra=10µm, and then degreasing and cleaning.
   The degreasing and cleaning includes ultrasonic degreasing, the ultrasonic degreasing cleaning agent has a concentration of 4 %, the temperature is 40°C, and the ultrasonic frequency is 25 kHz; the degreasing and cleaning further includes electrolytic degreasing, the electrolytic degreasing liquid is an active alkali, the alkali liquid has a temperature of 60°C, and the current density is 8 A/dm².
(2) Using an ultra-high-speed laser cladding process to weld and clad Inconel 625 powders on the inner wall of the casing pipe, and to weld and clad Inconel 625 powders around the end of the casing pipe.

The cladding is performed for 2 layers. The cladding thickness for the sealing surface is 0.55 mm, and the cladding thickness for the negative-angle torque shoulder is 0.55 mm.

In the ultra-high-speed laser cladding process, the parameters may be: laser power is 2200 W, diameter of laser spot is 1.0 mm, linear velocity of scanning is 25 m/min, overlap rate is 60%, feeding rate of powders is 10 g/min. The ultra-high-speed laser cladding process is performed under protection of protective gas. The protective gas is nitrogen, with a flow rate of 10 L/min.

### Step 3. Processing the products obtained after weld cladding

After cladding and welding the Inconel 625 material, the surface of the casing pipe and the surface of the threaded joint is very rough, with a porosity hs of about 0.5mm. If turning is performed directly after cladding, it will cause a great damage to the tool; therefore, in the present invention, a rough turning is firstly performed and then a finish turning is performed.

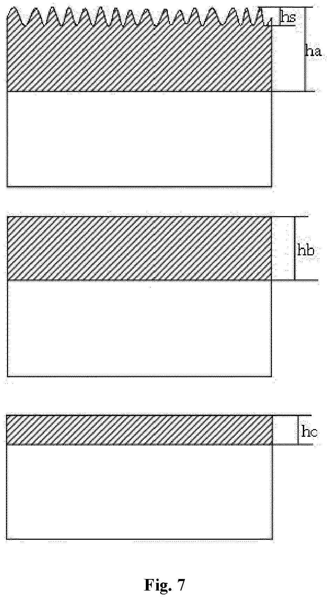

As shown in Figure 7, hs is the porosity, ha is the thickness of the Inconel 625 material after cladding, hb is the thickness of cladding layer after rough turning, and hc is the thickness of cladding layer of the finished product.
(1) Rough turning, so as to remove the porosity hs on the inner wall of the threaded joint, the outer wall of the casing pipe, and the outer wall at the end(s) of the casing pipe, that is to say, to remove an uneven layer on the surface thereof. After rough turning, the thickness of cladding layer hb≤ha-hs. A rough turning tool made of carbide is used. The tool tip has an arc of R0.5 mm; the machine tool has a speed of 70 rpm, and a cutting depth of the turning tool is 0.02 mm.
(2) Finish turning, so as to form the final threaded shape on the inner wall of the threaded joint, and the outer wall at the end of the casing pipe.

Because the heat dissipation performance of Inconel 625 material is poor, and using carbide tools may cause serious wear and tear, a finish turning tool made of ceramic material is used.

The tool tip has an arc of R0.1 mm; the machine tool has a speed of 90 rpm, and a cutting depth of the turning tool is 0.03 mm.

The final product has a thickness of cladding layer hc = 0.5 mm.

When a fluorescence penetration non-destructive testing according to JB/T4730.5-2005 standard is performed on the surface of the wear-resistant belt prepared as above, no crack defects are found. When a bonding strength test according to SY/T6948-2013 standard is conducted, it shows no separation between the casing pipe and the threaded joint.

### Example 2

A method for producing a structure with a casing pipe and a threaded joint, includes the following steps:

### Step 1. Weld cladding treatment on the inner wall of the threaded joint

(1) Providing a threaded joint, performing lathe turning on the inner wall to roughness Ra=15µm, and then degreasing and cleaning the inner wall.
   The degreasing and cleaning includes ultrasonic degreasing, the ultrasonic degreasing cleaning agent has a concentration of 5 %, the temperature is 45°C, and the ultrasonic frequency is 25 kHz; the degreasing and cleaning further includes electrolytic degreasing, the electrolytic degreasing liquid is an active alkali, the alkali liquid has a temperature of 70°C, and the current density is 9 A/dm².
(2) Using an ultra-high-speed laser cladding process to clad Inconel 625 powders on the inner wall of the threaded joint.

The cladding is performed for 3 layers. The cladding thickness for the sealing surface is 0.8 mm, and the cladding thickness for the negative-angle torque shoulder is 0.8 mm.

In the ultra-high-speed laser cladding process, the parameters may be: laser power is 2300 W, diameter of laser spot is 1.6 mm, linear velocity of scanning is 60 m/min, overlap rate is 65%, feeding rate of powders is 15 g/min. The ultra-high-speed laser cladding process is performed under protection of protective gas. The protective gas is nitrogen, with a flow rate of 12 L/min.

(3) Using an electroplating process to plate copper on the surface of the threaded joint;
In the electroplating process, the plating solution comprises cuprous cyanide, sodium cyanide and sodium hydroxide; the cathode current density is 1 A/dm², the temperature is 60°C; after the electroplating process, the copper plating layer has a thickness of 90µm.

### Step 2. Weld cladding treatment on the casing pipe

(1) Performing lathe turning on the inner wall of the casing pipe and on the outer wall at the end(s) of the casing pipe, to roughness Ra=15µm, and then degreasing and cleaning.
   The degreasing and cleaning includes ultrasonic degreasing, the ultrasonic degreasing cleaning agent has a concentration of 5 %, the temperature is 45°C, and the ultrasonic frequency is 25 kHz; the degreasing and cleaning further includes electrolytic degreasing, the electrolytic degreasing liquid is an active alkali, the alkali liquid has a temperature of 70°C, and the current density is 9 A/dm².
(2) Using an ultra-high-speed laser cladding process to weld and clad Inconel 625 powders on the inner wall of the casing pipe, and to weld and clad Inconel 625 powders around the end of the casing pipe.

The cladding is performed for 3 layers. The cladding thickness for the sealing surface is 0.8 mm, and the cladding thickness for the negative-angle torque shoulder is 0.8 mm.

In the ultra-high-speed laser cladding process, the parameters may be: laser power is 2300 W, diameter of laser spot is 1.6 mm, linear velocity of scanning is 60 m/min, overlap rate is 65%, feeding rate of powders is 15 g/min. The ultra-high-speed laser cladding process is performed under protection of protective gas. The protective gas is nitrogen, with a flow rate of 12 L/min.

### Step 3. Processing the products obtained after weld cladding

After cladding and welding the Inconel 625 material, the surface of the casing pipe and the surface of the threaded joint is very rough, with a porosity hs of about 0.5 mm. If turning is performed directly after cladding, it will cause a great damage to the tool; therefore, in the present invention, a rough turning is firstly performed and then a finish turning is performed.

As shown in Figure 7, hs is the porosity, ha is the thickness of the Inconel 625 material after cladding, hb is the thickness of cladding layer after rough turning, and hc is the thickness of cladding layer of the finished product.
(1) Rough turning, so as to remove the porosity hs on the inner wall of the threaded joint, the outer wall of the casing pipe, and the outer wall at the end(s) of the casing pipe, that is to say, to remove an uneven layer on the surface thereof. After rough turning, the thickness of cladding layer hb≤ha-hs. A rough turning tool made of carbide is used. The tool tip has an arc of R1.0 mm; the machine tool has a speed of 85 rpm, and a cutting depth of the turning tool is 0.04 mm.
(2) Finish turning, so as to form the final threaded shape on the inner wall of the threaded joint, and the outer wall at the end of the casing pipe.

Because the heat dissipation performance of Inconel 625 material is poor, and using carbide tools may cause serious wear and tear, a finish turning tool made of ceramic material is used.

The tool tip has an arc of R0.3 mm; the machine tool has a speed of 95 rpm, and a cutting depth of the turning tool is 0.06 mm.

The final product has a thickness of cladding layer hc = 0.7 mm.

When a fluorescence penetration non-destructive testing according to JB/T4730.5-2005 standard is performed on the surface of the wear-resistant belt prepared as above, no crack defects are found. When a bonding strength test according to SY/T6948-2013 standard is conducted, it shows no separation between the casing pipe and the threaded joint.

### Example 3

A method for producing a structure with a casing pipe and a threaded joint, includes the following steps:

### Step 1. Weld cladding treatment on the inner wall of the threaded joint

(1) Providing a threaded joint, performing lathe turning on the inner wall to roughness Ra=25µm, and then degreasing and cleaning the inner wall.
   The degreasing and cleaning includes ultrasonic degreasing, the ultrasonic degreasing cleaning agent has a concentration of 6 %, the temperature is 50°C, and the ultrasonic frequency is 25 kHz; the degreasing and cleaning further includes electrolytic degreasing, the electrolytic degreasing liquid is an active alkali, the alkali liquid has a temperature of 80°C, and the current density is 10 A/dm².
(2) Using an ultra-high-speed laser cladding process to clad Inconel 625 powders on the inner wall of the threaded joint.

The cladding is performed for 3 layers. The cladding thickness for the sealing surface is 1.15 mm, and the cladding thickness for the negative-angle torque shoulder is 1.15 mm.

In the ultra-high-speed laser cladding process, the parameters may be: laser power is 2500 W, diameter of laser spot is 1.8 mm, linear velocity of scanning is 80 m/min, overlap rate is 70%, feeding rate of powders is 20 g/min. The ultra-high-speed laser cladding process is performed under protection of protective gas. The protective gas is nitrogen, with a flow rate of 15 L/min.

(3) Using an electroplating process to plate copper on the surface of the threaded joint;

In the electroplating process, the plating solution comprises cuprous cyanide, sodium cyanide and sodium hydroxide; the cathode current density is 2 A/dm², the temperature is 65°C; after the electroplating process, the copper plating layer has a thickness of 100µm.

### Step 2. Weld cladding treatment on the casing pipe

(1) Performing lathe turning on the inner wall of the casing pipe and on the outer wall at the end(s) of the casing pipe, to roughness Ra=25µm, and then degreasing and cleaning.
   The degreasing and cleaning includes ultrasonic degreasing, the ultrasonic degreasing cleaning agent has a concentration of 6 %, the temperature is 50°C, and the ultrasonic frequency is 25 kHz; the degreasing and cleaning further includes electrolytic degreasing, the electrolytic degreasing liquid is an active alkali, the alkali liquid has a temperature of 80°C, and the current density is 10 A/dm².
(2) Using an ultra-high-speed laser cladding process to weld and clad Inconel 625 powders on the inner wall of the casing pipe, and to weld and clad Inconel 625 powders around the end of the casing pipe.

The cladding is performed for 3 layers. The cladding thickness for the sealing surface is 1.15 mm, and the cladding thickness for the negative-angle torque shoulder is 1.15 mm.

In the ultra-high-speed laser cladding process, the parameters may be: laser power is 2500 W, diameter of laser spot is 1.8 mm, linear velocity of scanning is 80 m/min, overlap rate is 70%, feeding rate of powders is 20 g/min. The ultra-high-speed laser cladding process is performed under protection of protective gas. The protective gas is nitrogen, with a flow rate of 15 L/min.

### Step 3. Processing the products obtained after weld cladding

After cladding and welding the Inconel 625 material, the surface of the casing pipe and the surface of the threaded joint is very rough, with a porosity hs of about 0.5 mm. If turning is performed directly after cladding, it will cause a great damage to the tool; therefore, in the present invention, a rough turning is firstly performed and then a finish turning is performed.

As shown in Figure 7, hs is the porosity, ha is the thickness of the Inconel 625 material after cladding, hb is the thickness of cladding layer after rough turning, and hc is the thickness of cladding layer of the finished product.
(1) Rough turning, so as to remove the porosity hs on the inner wall of the threaded joint, the outer wall of the casing pipe, and the outer wall at the end(s) of the casing pipe, that is to say, to remove an uneven layer on the surface thereof. After rough turning, the thickness of cladding layer hb≤ha-hs. A rough turning tool made of carbide is used. The tool tip has an arc of R1.5 mm; the machine tool has a speed of 120 rpm, and a cutting depth of the turning tool is 0.07 mm.
(2) Finish turning, so as to form the final threaded shape on the inner wall of the threaded joint, and the outer wall at the end of the casing pipe.

Because the heat dissipation performance of Inconel 625 material is poor, and using carbide tools may cause serious wear and tear, a finish turning tool made of ceramic material is used.

The tool tip has an arc of R1.0 mm; the machine tool has a speed of 150 rpm, and a cutting depth of the turning tool is 0.08 mm.

The final product has a thickness of cladding layer hc = 1.0 mm.

When a fluorescence penetration non-destructive testing according to JB/T4730.5-2005 standard is performed on the surface of the wear-resistant belt prepared as above, no crack defects are found. When a bonding strength test according to SY/T6948-2013 standard is conducted, it shows no separation between the casing pipe and the threaded joint.

The above description of the embodiments is used to facilitate the skilled person in the technical field to understand and use the invention, as set out in the appended claims.

## Claims

1. A method for producing a structure with a casing pipe (100) and a threaded joint (200),
wherein the threaded joint (200) is suitable for being provided around an end of the casing pipe (100), so as to connect two casing pipes (100); wherein a threaded portion (300) is provided on the outer wall at the end of the casing pipe (100) and on the inner wall of the threaded joint (200); one end of the threaded portion (300) of the casing pipe (100) is provided with an undercut groove (400) and a sealing surface (500);
a negative-angle torque shoulder (600) is provided at an inner side of the sealing surface (500); the method includes the following steps:
Step 1, weld cladding treatment on the inner wall of the threaded joint
(1) providing a threaded joint, performing lathe turning on the inner wall to roughness Ra≤25 µm;
(2) using a laser cladding process to weld and clad powders of Inconel 625 alloy on the inner wall of the threaded joint;
(3) optionally, using an electroplating process to plate copper on the surface of the threaded joint;
Step 2, weld cladding treatment on the casing pipe
(1) performing lathe turning on the inner wall of the casing pipe and on the outer wall at the end of the casing pipe, to roughness Ra≤25 µm;
(2) using a laser cladding process to weld and clad powders of Inconel 625 alloy on the inner wall of the casing pipe, and to weld and clad powders of Inconel 625 alloy on the outer wall at the end of the casing pipe;
Step 3, processing the product obtained after weld cladding
(1) rough turning, so as to remove an uneven layer on the surface of the cladding layer;
(2) finish turning, so as to form the final threaded shape on the inner wall of the threaded joint, and on the outer wall at the end of the casing pipe;
wherein the laser cladding process adopts the following parameters: laser power is 2200-2500 W, diameter of laser spot is 1.0-1.8 mm, linear velocity of scanning is 25-80 m/min, overlap rate is 60-70%, feeding rate of powders is 10-20 g/min.

2. The method for producing the structure with the casing pipe and the threaded joint according to claim 1, in the rough turning of step 3, a rough turning tool made of carbide is used; preferably, the tool tip has an arc of R0.5-1.5 mm; the machine tool has a speed of 70-120 rpm, and a cutting depth of the turning tool is 0.02-0.07mm.

3. The method for producing the structure with the casing pipe and the threaded joint according to any one of claims 1 to 2, in the finish turning of step 3, a finish turning tool made of ceramic material is used; preferably, the tool tip has an arc of R0.1-1mm; the machine tool has a speed of 90-150 rpm, and a cutting depth of the turning tool is 0.03-0.08 mm.

4. The method for producing the structure with the casing pipe and the threaded joint according to any one of claims 1 to 3, the laser cladding process is performed under protection of protective gas, for example, the protective gas is nitrogen, with a flow rate of 10-15 L/min.

5. The method for producing the structure with the casing pipe and the threaded joint according to any one of claims 1 to 4, in the step 1 and/or 2, after the performing lathe turning to roughness Ra≤25µm, degreasing and cleaning; preferably, the degreasing and cleaning includes ultrasonic degreasing, for example, the ultrasonic degreasing/cleaning agent has a concentration of 4 to 6%, the temperature is 40 to 50°C, and the ultrasonic frequency is 25 kHz.

6. The method for producing the structure with the casing pipe and the threaded joint according to any one of claims 1 to 5, the degreasing and cleaning includes electrolytic degreasing, for example, the electrolytic degreasing liquid is an active alkali, has a temperature of 60-80°C, and the current density is 8-10 A/dm².

7. The method for producing the structure with the casing pipe and the threaded joint according to any one of claims 1 to 6, in the electroplating process, the plating solution comprises cuprous cyanide, sodium cyanide and sodium hydroxide.

8. The method for producing the structure with the casing pipe and the threaded joint according to any one of claims 1 to 7, during electroplating, the cathode current density is 0.2-2 A/dm², the temperature is 55-65°C.

9. The method for producing the structure with the casing pipe and the threaded joint according to any one of claims 1 to 8, after the electroplating process, the copper plating layer has a thickness of 80-100 µm.

10. A structure with a casing pipe (100) and a threaded joint (200), which is produced by the method of any of claims 1 to 9.

## Patentansprüche

1. Verfahren zum Herstellen einer Struktur mit einem Gehäuserohr (100) und einer Schraubverbindung (200),
wobei die Schraubverbindung (200) dafür geeignet ist, um ein Ende des Gehäuserohrs (100) herum bereitgestellt zu werden, um zwei Gehäuserohre (100) zu verbinden; wobei ein Schraubabschnitt (300) an der Außenwand an dem Ende des Gehäuserohrs (100) und an der Innenwand der Schraubverbindung (200) bereitgestellt ist; ein Ende des Schraubabschnitts (300) des Gehäuserohrs (100) mit einer Hinterschnittnut (400) und einer Dichtungsoberfläche (500) versehen ist;
ein Drehmomentansatz (600) mit negativem Winkel an einer Innenseite der Dichtungsoberfläche (500) bereitgestellt ist;
wobei das Verfahren die folgenden Schritte enthält:
Schritt 1, Schweißplattierungsbehandlung an der Innenwand der Schraubverbindung
(1) Bereitstellen einer Schraubverbindung, Durchführen von Drehmaschinendrehen an der Innenwand auf eine Rauheit Ra≤25 µm;
(2) Verwenden eines Laserplattierungsvorgangs zum Schweißen und Plattieren von Pulvern von Inconel-625-Legierung an der Innenwand der Schraubverbindung;
(3) optional Verwenden eines Elektrogalvanisierungsvorgangs, um Kupfer auf der Oberfläche der Schraubverbindung zu galvanisieren;
Schritt 2, Schweißplattierungsbehandlung an dem Gehäuserohr
(1) Durchführen eines Drehmaschinendrehens an der Innenwand des Gehäuserohrs und an der Außenwand an dem Ende des Gehäuserohrs, auf eine Rauheit Ra≤25 µm;
(2) Verwenden eines Laserplattierungsvorgangs zum Schweißen und Plattieren von Pulvern von Inconel-625-Legierung an der Innenwand des Gehäuserohrs und zum Schweißen und Plattieren von Pulvern von Inconel-625-Legierung an der Außenwand am Ende des Gehäuserohrs;
Schritt 3, Verarbeiten des nach dem Schweißplattieren erlangten Produkts
(1) Schruppdrehen, um eine ungleichmäßige Schicht auf der Oberfläche der Plattierungsschicht zu entfernen;
(2) Schlichtdrehen, um die endgültige Schraubform an der Innenwand der Schraubverbindung und an der Außenwand an dem Ende des Gehäuserohrs auszubilden;
wobei der Laserplattierungsvorgang die folgenden Parameter annimmt: Laserleistung beträgt 2200-2500 W, Durchmesser des Laserspots beträgt 1,0-1,8 mm, lineare Geschwindigkeit des Abtastens beträgt 25-80 m/min, Überlappungsrate beträgt 60-70 %, Zuführrate der Pulver beträgt 10-20 g/min.

2. Verfahren zum Herstellen der Struktur mit dem Gehäuserohr und der Schraubverbindung gemäß Anspruch 1, bei dem Schruppdrehen von Schritt 3 ein Schruppdrehwerkzeug aus Hartmetall verwendet wird; bevorzugt die Werkzeugspitze einen Bogen mit R0,5-1,5 mm aufweist; die Werkzeugmaschine eine Geschwindigkeit von 70-120 U/min und eine Spantiefe des Drehwerkzeugs von 0,02-0,07 mm aufweist.

3. Verfahren zum Herstellen der Struktur mit dem Gehäuserohr und der Schraubverbindung gemäß einem der Ansprüche 1 bis 2, bei dem Schlichtdrehen von Schritt 3 ein Schlichtdrehwerkzeug aus keramischem Material verwendet wird; bevorzugt die Werkzeugspitze einen Bogen von R0,1-1 mm aufweist; die Werkzeugmaschine eine Geschwindigkeit von 90-150 U/min und eine Spantiefe des Drehwerkzeugs von 0,03-0,08 mm aufweist.

4. Verfahren zum Herstellen der Struktur mit dem Gehäuserohr und der Schraubverbindung gemäß einem der Ansprüche 1 bis 3, der Laserplattierungsvorgangs unter Schutz von Schutzgas durchgeführt wird, beispielsweise das Schutzgas Stickstoff, mit einer Durchflussrate von 10-15 1/min ist.

5. Verfahren zum Herstellen der Struktur mit dem Gehäuserohr und der Schraubverbindung gemäß einem der Ansprüche 1 bis 4, in dem Schritt 1 und/oder 2 nach dem Durchführen des Drehmaschinendrehens auf eine Rauheit Ra≤25 µm Entfetten und Reinigen; bevorzugt das Entfetten und Reinigen Ultraschallentfettung enthält, beispielsweise das Mittel zur Ultraschallentfettung/Reinigung eine Konzentration von 4 bis 6 % aufweist, die Temperatur 40 bis 50 °C beträgt und die Ultraschallfrequenz 25 kHz beträgt.

6. Verfahren zum Herstellen der Struktur mit dem Gehäuserohr und der Schraubverbindung gemäß einem der Ansprüche 1 bis 5, das Entfetten und Reinigen elektrolytisches Entfetten enthält, beispielsweise die elektrolytische Entfettungsflüssigkeit ein aktives Alkali ist, eine Temperatur von 60-80 °C aufweist und die Stromdichte ist 8-10 A/dm² beträgt.

7. Verfahren zum Herstellen der Struktur mit dem Gehäuserohr und der Schraubverbindung gemäß einem der Ansprüche 1 bis 6, in dem Elektrogalvanisierungsvorgang die Galvanisierungslösung Kupfercyanid, Natriumcyanid und Natriumhydroxid umfasst.

8. Verfahren zum Herstellen der Struktur mit dem Gehäuserohr und der Schraubverbindung gemäß einem der Ansprüche 1 bis 7, während der Elektrogalvanisierung die Kathodenstromdichte 0,2-2 A/dm² beträgt, die Temperatur 55-65 °C beträgt.

9. Verfahren zum Herstellen der Struktur mit dem Gehäuserohr und der Schraubverbindung gemäß einem der Ansprüche 1 bis 8, nach dem Elektrogalvanisierungsvorgang die Kupfergalvanisierungsschicht eine Dicke von 80-100 µm aufweist.

10. Struktur mit einem Gehäuserohr (100) und einer Schraubverbindung (200), welche durch das Verfahren nach einem der Ansprüche 1 bis 9 hergestellt ist.

## Revendications

1. Procédé permettant de produire une structure avec un tube de gainage (100) et un joint fileté (200), ledit joint fileté (200) étant adapté pour être disposé autour d'une extrémité du tube de gainage (100), de façon à relier deux tubes de gainage (100) ; une partie filetée (300) étant prévue sur la paroi externe au niveau de l'extrémité du tube de gainage (100) et sur la paroi interne du joint fileté (200) ; une extrémité de la partie filetée (300) du tube de gainage (100) étant pourvue d'une rainure en contre-dépouille (400) et d'une surface d'étanchéité (500) ;
un épaulement de couple à angle négatif (600) étant prévue sur un côté interne de la surface d'étanchéité (500) ; ledit procédé comprenant les étapes suivantes :
Étape 1, traitement de revêtement par soudage sur la paroi interne du joint fileté
(1) fourniture d'un joint fileté, réalisation d'un tournage au tour sur la paroi interne jusqu'à une rugosité Ra ≤ 25 µm ;
(2) utilisation d'un processus de placage au laser afin de souder et de revêtir des poudres d'alliage Inconel 625 sur la paroi interne du joint fileté ;
(3) éventuellement, utilisation d'un processus de placage par galvanoplastie afin de plaquer du cuivre sur la surface du joint fileté ; Étape 2, traitement de revêtement par soudage sur le tube de gainage
(1) réalisation d'un tournage au tour sur la paroi interne du tube de gainage et sur la paroi externe au niveau de l'extrémité du tube de gainage, jusqu'à une rugosité Ra ≤ 25 µm ;
(2) utilisation d'un processus de placage au laser pour souder et revêtir des poudres d'alliage Inconel 625 sur la paroi interne du tube de gainage, et pour souder et revêtir des poudres d'alliage Inconel 625 sur la paroi externe au niveau de l'extrémité du tube de gainage ;
Étape 3, usinage du produit obtenu après le revêtement par soudage
(1) tournage d'ébauche, de façon à éliminer une couche irrégulière sur la surface de la couche de revêtement ;
(2) tournage de finition, de façon à former la forme filetée finale sur la paroi interne du joint fileté, et sur la paroi externe au niveau de l'extrémité du tube de gainage ;
ledit processus de placage au laser adoptant les paramètres suivants : la puissance laser est de 2200-2500 W, le diamètre du point laser est de 1,0-1,8 mm, la vitesse linéaire de balayage est de 25-80 m/min, le taux de chevauchement est de 60-70 %, le débit d'alimentation des poudres est de 10-20 g/min.

2. Procédé permettant de produire la structure avec le tube de gainage et le joint fileté selon la revendication 1, dans le tournage d'ébauche de l'étape 3, un outil de tournage d'ébauche constitué de carbure est utilisé ; de préférence, la pointe de l'outil possède un arc de R 0,5-1,5 mm ; la machine-outil présente une vitesse de 70-120 tours par minute, et une profondeur de coupe de l'outil de tournage de 0,02-0,07 mm.

3. Procédé permettant la production de la structure avec le tube de gainage et le joint fileté selon l'une quelconque des revendications 1 à 2, dans le tournage de finition de l'étape 3, un outil de tournage de finition constitué de matériau céramique est utilisé ; de préférence, la pointe de l'outil possède un arc de R 0,1-1 mm ; la machine-outil possède une vitesse de 90-150 tours par minute, et une profondeur de coupe de l'outil de tournage de 0,03-0,08 mm.

4. Procédé permettant la production de la structure avec le tube de gainage et le joint fileté selon l'une quelconque des revendications 1 à 3, le processus de placage au laser étant réalisé sous protection d'un gaz protecteur, par exemple, le gaz protecteur est de l'azote, avec un débit de 10-15 I/min.

5. Procédé permettant de produire la structure avec le tube de gainage et le joint fileté selon l'une quelconque des revendications 1 à 4, dans l'étape 1 et/ou 2, après la réalisation du tournage au tour jusqu'à une rugosité Ra ≤ 25 µm, dégraissage et nettoyage ; de préférence, le dégraissage et le nettoyage comprennent un dégraissage ultrasonique, par exemple, l'agent de dégraissage/nettoyage ultrasonique possède une concentration de 4 à 6 %, la température est de 40 à 50°C, et la fréquence ultrasonique est de 25 kHz.

6. Procédé permettant de produire la structure avec le tube de gainage et le joint fileté selon l'une quelconque des revendications 1 à 5, le dégraissage et le nettoyage comprennent un dégraissage électrolytique, par exemple, le liquide de dégraissage électrolytique est un alcali actif, possède une température de 60-80°C, et la densité de courant est de 8-10 A/dm².

7. Procédé permettant de produire la structure avec le tube de gainage et le joint fileté selon l'une quelconque des revendications 1 à 6, dans le processus de placage par galvanoplastie, la solution de placage comprend du cyanure cuivreux, du cyanure de sodium et de l'hydroxyde de sodium.

8. Procédé permettant de produire la structure avec le tube de gainage et le joint fileté selon l'une quelconque des revendications 1 à 7, durant le placage par galvanoplastie, la densité de courant cathodique est de 0,2-2 A/dm², la température est de 55-65°C.

9. Procédé permettant de produire la structure avec le tube de gainage et le joint fileté selon l'une quelconque des revendications 1 à 8, après le processus de placage par galvanoplastie, la couche de placage de cuivre possède une épaisseur de 80-100 µm.

10. Structure avec un tube de gainage (100) et un joint fileté (200), qui est produite par le procédé de l'une quelconque des revendications 1 à 9.
